# EUROPEAN PATENT APPLICATION

(11) **EP 4 290 617 A1**
(43) Date of publication of application: **13.12.2023**
(21) Application number: 22775364.7
(22) Date of filing: 17.03.2022
(51) Int. Cl.: H01M 4/58, H01M 4/587, H01M 10/0525

(54) **NONAQUEOUS ELECTROLYTE POWER STORAGE ELEMENT**

(30) Priority: 25.03.2021 JP 2021051486
(71) Applicant: GS Yuasa International Ltd., Kisshoin, Minami-ku, Kyoto-shi, Kyoto 601-8520 (JP)
(72) Inventor: FURUYA, Yasuyuki, Kyoto-shi, Kyoto 601-8520 (JP); MATSUYOSHI, Tsubasa, Kyoto-shi, Kyoto 601-8520 (JP); SOGO, Yasuhiro, Kyoto-shi, Kyoto 601-8520 (JP)
(74) Representative: Isarpatent
(86) International application number: PCT/JP2022/012104
(87) International publication number: WO 2022/202576

(57) **Abstract**

A nonaqueous electrolyte energy storage device according to one aspect of the present invention includes: a positive electrode containing a polyanionic positive active material; and a negative electrode containing non-graphitic carbon, in which a ratio A/B of a specific surface area A (m²/g) of the polyanionic positive active material to an average particle size B (pm) of the non-graphitic carbon is 4 or more.

## Description

### TECHNICAL FIELD

The present invention relates to a nonaqueous electrolyte energy storage device.

### BACKGROUND ART

Nonaqueous electrolyte secondary batteries typified by lithium ion nonaqueous electrolyte secondary batteries are widely used in electronic equipment such as personal computers and communication terminals, motor vehicles, and the like because the batteries are high in energy density. The nonaqueous electrolyte secondary battery is generally provided with an electrode assembly with a pair of electrodes electrically isolated by a separator, and a nonaqueous electrolyte interposed between the electrodes and is configured to be charged and discharged by transferring ions between both the electrodes. In addition, capacitors such as lithium ion capacitors and electric double layer capacitors are also widely used as nonaqueous electrolyte energy storage devices other than the nonaqueous electrolyte secondary batteries.

As a positive active material used in a nonaqueous electrolyte energy storage device, a polyanionic positive active material such as lithium iron phosphate is known. Patent Document 1 describes a nonaqueous electrolyte secondary battery including a positive electrode containing lithium iron phosphate as a positive active material and a negative electrode containing graphite as a negative active material.

### PRIOR ART DOCUMENT

### PATENT DOCUMENT

Patent Document 1: JP-A-2007-213961

### SUMMARY OF THE INVENTION

### PROBLEMS TO BE SOLVED BY THE INVENTION

In a nonaqueous electrolyte energy storage device in which a polyanionic positive active material and graphite as a negative active material are used, there is a disadvantage that even when a charge-discharge curve (SOC-OCV curve) is relatively flat, that is, even when a state of charge (SOC) changes, a voltage is relatively constant, and it is difficult to detect the SOC based on the voltage. In applications where high input/output performance is required, such as a power source for a mild hybrid vehicle, the conventional nonaqueous electrolyte energy storage device using a polyanionic positive active material is desired to be improved particularly in terms of input performance.

The present invention has been made in view of the foregoing circumstances, and an object of the present invention is to provide a nonaqueous electrolyte energy storage device which can easily detect an SOC and has high input performance.

### MEANS FOR SOLVING THE PROBLEMS

A nonaqueous electrolyte energy storage device according to one aspect of the present invention includes: a positive electrode containing a polyanionic positive active material; and a negative electrode containing non-graphitic carbon, in which a ratio A/B of a specific surface area A (m²/g) of the polyanionic positive active material to an average particle size B (pm) of the non-graphitic carbon is 4 or more.

### ADVANTAGES OF THE INVENTION

According to one aspect of the present invention, it is possible to provide a nonaqueous electrolyte energy storage device which can easily detect an SOC and has high input performance.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus configured by assembling a plurality of nonaqueous electrolyte energy storage devices.
Fig. 3 is a charge curve (SOC-OCV curve) of each nonaqueous electrolyte energy storage device according to Example 1 and Comparative Example 1.
Fig. 4 is a graph showing a relationship between a ratio A/B and input performance in each nonaqueous electrolyte energy storage device according to Examples 1 to 3 and Comparative Examples 2 to 4.

### MODE FOR CARRYING OUT THE INVENTION

First, the outline of a nonaqueous electrolyte energy storage device disclosed in the present specification will be described.

A nonaqueous electrolyte energy storage device according to one aspect of the present invention includes: a positive electrode containing a polyanionic positive active material; and a negative electrode containing non-graphitic carbon, in which a ratio A/B of a specific surface area A (m²/g) of the polyanionic positive active material to an average particle size B (pm) of the non-graphitic carbon is 4 or more.

The nonaqueous electrolyte energy storage device can easily detect an SOC and has high input performance. Although the reason for this is not clear, the following reason is presumed. A charge-discharge potential of the polyanionic positive active material such as lithium iron phosphate is relatively constant even when the SOC changes. The charge-discharge potential of graphite as a negative active material is also relatively constant even when the SOC changes. Therefore, in the case of a nonaqueous electrolyte energy storage device in which the polyanionic positive active material and the graphite are combined as positive and negative active materials, a charge-discharge curve (SOC-OCV curve) is relatively flat. On the other hand, the charge-discharge potential of the non-graphitic carbon changes depending on the SOC, and the lower the SOC, the lower the charge-discharge potential. Therefore, in the case of a nonaqueous electrolyte energy storage device in which the polyanionic positive active material and non-graphitic carbon are combined as positive and negative active materials, the charge-discharge curve has a slope, so that it is easy to detect the SOC based on the voltage. Regarding the input (reaction at the time of charge) of the nonaqueous electrolyte energy storage device, it is considered that a desorption reaction of charge carrier ions (lithium ions and the like) from the positive active material and an insertion reaction of charge carrier ions into the negative active material are rate-limiting. It is considered that reaction resistance of desorption of the charge carrier ions from the positive active material is reduced by increasing the specific surface area A of the polyanionic positive active material as the positive active material, and reaction resistance of insertion of the charge carrier ions into the negative active material is reduced by decreasing the average particle size B of the non-graphitic carbon as the negative active material. Thus, it is presumed that by increasing the ratio A/B of the specific surface area A (m²/g) of the polyanionic positive active material to the average particle size B (pm) of the non-graphitic carbon to 4 or more, the reaction resistance is reduced in both the desorption reaction of the charge carrier ions from the positive active material and the insertion reaction of the charge carrier ions into the negative active material (thus, input resistance of the nonaqueous electrolyte energy storage device is effectively reduced), and the input performance is remarkably improved.

The term "non-graphitic carbon" refers to a carbon material in which the average grid spacing (d₀₀₂) of the (002) plane determined by the X-ray diffraction method before charge-discharge or in the discharged state is 0.34 nm or more and 0.42 nm or less. In this regard, the "discharged state" means a state discharged so that lithium ions that can be stored and released in association with charge-discharge are sufficiently released from the carbon material as the negative active material. For example, the "discharged state" refers to a state where an open circuit voltage is 1.3 V or more in a monopolar battery in which a negative electrode containing a carbon material as a negative active material is used as a working electrode and metal Li is used as a counter electrode.

The "specific surface area" means a value determined by performing pore diameter distribution measurement using a nitrogen adsorption method in accordance with JIS-Z-8830 (2013). This measurement can be performed by using a specific surface area measuring apparatus "trade name: Flow Soap III 2310" manufactured by Micromeritics Instrument Corporation, setting an amount of a measurement sample charged to 0.5 ± 0.01 g, preheating to 110°C for 90 min, cooling with liquid nitrogen, and measuring the nitrogen gas adsorption amount in the cooling process.

The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

The specific surface area A of the polyanionic positive active material is preferably more than 14.0 m²/g. In such a case, the input performance of the nonaqueous electrolyte energy storage device is further enhanced.

A nonaqueous electrolyte energy storage device, an energy storage apparatus, and a method for manufacturing a nonaqueous electrolyte energy storage device according to an embodiment of the present invention, and other embodiments will be described in detail. The names of the constituent members (constituent elements) used in the embodiments may be different from the names of the constituent members (constituent elements) used in the background art.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state of being contained in the positive electrode, the negative electrode, and the separator. A nonaqueous electrolyte secondary battery (hereinafter, also simply referred to as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Ω ·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H4160 (2006). The positive substrate may be provided with a coating layer formed from a carbon material or the like on a surface thereof.

The average thickness of the positive substrate is preferably 3 pm or more and 50 pm or less, more preferably 5 pm or more and 40 pm or less, still more preferably 8 pm or more and 30 pm or less, and particularly preferably 10 pm or more and 25 pm or less. By setting the average thickness of the positive substrate to the above range, it is possible to increase the energy density per volume of a secondary battery while increasing the strength of the positive substrate.

The intermediate layer is a layer arranged between the positive substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer contains a polyanionic positive active material which is a positive active material. The positive active material layer contains other positive active material, and optional components such as a conductive agent, a binder, a thickener and a filler as necessary.

The polyanionic positive active material is a polyanion compound capable of storing and releasing ions such as lithium ions. Examples of the polyanion compound include compounds containing an oxoacid anion (PO₄³⁻, SO₄², SiO₄⁴⁻, BO₃³⁻, VO₄³⁻, etc.). The oxoacid anion may be a condensed anion (P₂O₇⁴⁻, P₃O₁₀⁵⁻, etc.). The polyanionic positive active material is preferably a polyanion compound containing an alkali metal element or an alkaline earth metal element and a transition metal element. The polyanionic positive active material may further contain other elements (for example, halogen elements). The alkali metal element or alkaline earth metal element of the polyanionic positive active material is preferably a lithium element. As the transition metal element of the polyanionic positive active material, an iron element, a manganese element, a nickel element, and a cobalt element are preferable, and an iron element is more preferable. The oxoacid anion of the polyanionic positive active material is preferably a phosphate anion (PO₄³⁻).

The polyanionic positive active material is preferably a compound represented by the following Formula 1.

LiₐM_{b}(AO_{c})_{d}Xₑ ... 1

In Formula 1, M represents at least one transition metal element. A is at least one element selected from B, Al, Si, P, S, Cl, Ti, V, Cr, Mo, and W. X is at least one halogen element. a, b, c, d, and e are numbers that satisfy 0 < a ≤ 3, 0 < b ≤ 2, 2 ≤ c ≤ 4, 1 ≤ d ≤ 3, and 0 ≤ e ≤ 1. Each of a, b, c, d, and e may be an integer or a decimal.

As M in Formula 1, any one of Fe, Mn, Ni, and Co, or a combination of any two of these is preferable, and one having a high content of such an element (for example, in M, Fe or Mn is contained in an amount of 50 mol% or more) is preferable. Among them, Fe or Mn or a combination of two kinds of Fe and Mn is preferable, and particularly, it is preferable that M is only Fe or the content of Fe is high. A is preferably P. X is preferably F. As an embodiment, a = 1, b = 1, c = 4, d = 1, and e = 0 may be preferable. The technique disclosed herein can be preferably carried out in an aspect in which the polyanionic positive active material contains at least one of Fe, Mn, Ni, and Co.

Specific examples of the polyanionic positive active material include LiFePO₄, LiCoPO₄, LiFe_{0.5}Co_{0.5}PO₄, LiMnPO₄, LiNiPO₄, LiMn_{0.5}Fe_{0.5}PO₄, LiCrPO₄, LiFeVO₄, Li₂FeSiO₄, Li₂Fe₂(SO₄)₃, LiFeBO₃, LiFePO_{3.9}F_{0.2}, Li₃V₂(PO₄)₃, Li₂MnSiO₄, and Li₂CoPO₄F. Some of atoms or polyanions in these polyanionic positive active materials may be substituted with other atoms or other anion species. The polyanionic positive active material may have a surface coated with other materials. One of the polyanionic positive active material may be used singly, or two or more thereof may be used in mixture.

The polyanionic positive active material is usually a particle (powder). The average particle size of the polyanionic positive active material is preferably 0.1 pm or more and 20 pm or less, for example. By setting the average particle size of the polyanionic positive active material to be equal to or more than the above lower limit, the polyanionic positive active material is easily produced or handled. By setting the average particle size of the polyanionic positive active material to be equal to or less than the above upper limit, the electron conductivity of the positive active material layer is improved.

A crusher or a classifier is used to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As a classification method, a sieve or a wind force classifier or the like is used based on the necessity both in dry manner and in wet manner.

The specific surface area A of the polyanionic positive active material is not particularly limited as long as the ratio (A/B) to the average particle size B of the non-graphitic carbon satisfies 4 or more, and is preferably 10 m²/g or more, more preferably 12 m²/g or more, and still more preferably more than 14.0 m²/g. By setting the specific surface area A of the polyanionic positive active material to be equal to or more than the above lower limit, the input performance of the secondary battery is further enhanced. The specific surface area A of the polyanionic positive active material is preferably 30 m²/g or less, and more preferably 20 m²/g or less. By setting the specific surface area A of the polyanionic positive active material to be equal to or less than the above upper limit, the adsorption of water to the polyanionic positive active material is suppressed, for example, and thus productivity of a positive composite paste used for forming the positive active material layer is stabilized. The technique disclosed herein can be preferably carried out in an aspect in which the specific surface area A of the polyanionic positive active material is 10 m²/g or more and 30 m²/g or less (for example, 12 m²/g or more and 25 m²/g or less, more than 14.0 m²/g and 20 m²/g or less).

A surface of the polyanionic positive active material may be coated with a carbonaceous material (graphite, non-graphitic carbon, etc.) or the like. However, when the polyanionic positive active material is lithium iron phosphate (LiFePO₄) and is coated with non-graphitic carbon, in Raman spectrum of such a coated positive active material, it may be preferable that a ratio (C/L) of an intensity area (C) of a Raman peak of carbon appearing at a wave number of 965 cm⁻¹ to 1790 cm⁻¹ to an intensity area (L) of a Raman peak of lithium iron phosphate appearing at a wave number of 935 cm⁻¹ to 965 cm⁻¹ is not 400 or more. The Raman spectrum is a Raman spectrum obtained by Raman spectrometry at a laser wavelength of 532 nm. When the surface of the polyanionic positive active material is coated with a carbonaceous material (graphite, non-graphitic carbon, etc.) or the like, the specific surface area A of the polyanionic positive active material is a specific surface area in a state of being coated with the carbonaceous material or the like.

The content of the polyanionic positive active material in the positive active material layer is preferably 50% by mass or more and 99% by mass or less, more preferably 70% by mass or more and 98% by mass or less, and still more preferably 80% by mass or more and 95% by mass or less. When the content of the polyanionic positive active material is in the above range, it is possible to achieve both high energy density and productivity of the positive active material layer.

The positive active material layer may further contain other positive active materials besides the polyanionic positive active material. As other positive active materials, various conventionally known positive active materials can be used. However, the content of the polyanionic positive active material with respect to all the positive active materials (the total of the polyanionic positive active material and other positive active materials) contained in the positive active material layer is preferably 90% by mass or more, more preferably 99% by mass or more, and still more preferably 100% by mass or more. When the positive active material is configured substantially only from the polyanionic positive active material as described above, the detection of the SOC becomes easier.

The conductive agent is not particularly limited as long as it is a conductive material. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material obtained by compositing carbon black with CNT may be used. Among them, carbon black is preferable, an in particular, acetylene black is preferable, from the viewpoint of electron conductivity and coatability.

The content of the conductive agent in the positive active material layer is preferably 1% by mass or more and 10% by mass or less, more preferably 3% by mass or more and 9% by mass or less. By setting the content of the conductive agent in the above range, the energy density of the secondary battery can be enhanced. The content of the conductive agent does not include a carbonaceous material or the like that coats the surface of the polyanionic positive active material.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrene-butadiene rubber (SBR), and fluororubber; and polysaccharide polymers.

The content of the binder in the positive active material layer is preferably 1% by mass or more and 10% by mass or less, more preferably 3% by mass or more and 9% by mass or less. By setting the content of the binder in the above range, the active material can be stably held.

Examples of the thickener include polysaccharide polymers such as carboxymethylcellulose (CMC), and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material for the negative substrate, a metal such as copper, nickel, stainless steel, or a nickel-plated steel, or an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include rolled copper foils and electrolytic copper foils.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. When the average thickness of the negative substrate is within the above range, it is possible to enhance the energy density per volume of a secondary battery while increasing the strength of the negative substrate.

The negative active material layer contains non-graphitic carbon which is a negative active material. The negative active material layer contains other negative active material, and optional components such as a conductive agent, a binder, a thickener and a filler as necessary. The optional components such as a conductive agent, a binder, a thickener, and a filler can be selected from the materials exemplified for the positive electrode. In a preferred aspect, the negative active material layer contains an aqueous binder (water-soluble or water-dispersible binder) as a binder. Examples of the aqueous binder include SBR and PTFE. When the negative active material layer contains the aqueous binder, the above-described effect can be more suitably exhibited. In a preferred aspect, the negative active material layer does not contain the above-described conductive agent.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

Examples of the non-graphitic carbon include non-graphitizable carbon and graphitizable carbon, and non-graphitizable carbon is preferable. Examples of the non-graphitic carbon include a resin-derived material, a petroleum pitch or a material derived from petroleum pitch, a petroleum coke or a material derived from petroleum coke, a plant-derived material, and an alcohol derived material.

The "non-graphitizable carbon" refers to a carbon material in which the d₀₀₂ is 0.36 nm or more and 0.42 nm or less.

The "graphitizable carbon" refers to a carbon material in which the d₀₀₂ is 0.34 nm or more and less than 0.36 nm.

The average particle size B of the non-graphitic carbon is not particularly limited as long as the ratio (A/B) of the specific surface area A of the polyanionic positive active material to the average particle size B of the non-graphitic carbon satisfies 4 or more, and is preferably 4 pm or less, and more preferably 3 pm or less. By setting the average particle size B of the non-graphitic carbon to be equal to or less than the above upper limit, the input performance of the secondary battery is further enhanced. The average particle size B of the non-graphitic carbon is preferably 0.5 pm or more, more preferably 1 pm or more, still more preferably 2 pm or more. By setting the average particle size B of the non-graphitic carbon to be equal to or more than the above lower limit, the negative active material layer containing the non-graphitic carbon is easily produced or handled. Specifically, the aggregation of the non-graphitic carbon is suppressed in a negative composite paste used for forming the negative active material layer, and stability when the negative active material layer is formed by coating is enhanced. A crusher, a classifier, or the like is used to obtain a non-graphitic carbon with a predetermined particle size. A crushing method and a powder classification method can be selected from, for example, the methods exemplified for the positive electrode. The technique disclosed herein can be preferably carried out in an aspect in which the average particle size B of the non-graphitic carbon is 0.5 pm or more and 4 pm or less (for example, 1 pm or more and 3.5 pm or less, 1.5 pm or more and 3 pm or less, 2 pm or more and 2.8 pm or less).

The content of the non-graphitic carbon in the negative active material layer is preferably 60% by mass or more and 99% by mass or less, and more preferably 90% by mass or more and 98% by mass or less. When the content of the non-graphitic carbon is in the above range, it is possible to achieve both high energy density and productivity of the negative active material layer.

The negative active material layer may further contain other negative active materials besides the non-graphitic carbon. As other negative active materials, various conventionally known negative active materials can be used. However, the content of the non-graphitic carbon with respect to all the negative active materials (the total of the non-graphitic carbon and other negative active materials) contained in the negative active material layer is preferably 90% by mass or more, more preferably 99% by mass or more, and still more preferably 100% by mass. When the negative active material is configured substantially only from the non-graphitic carbon as described above, the detection of the SOC becomes easier, and the input performance is further enhanced. In a preferred aspect, the negative active material layer does not contain amorphous carbon or active carbon.

### (Ratio A/B)

The lower limit of the ratio A/B of the specific surface area A (m²/g) of the polyanionic positive active material contained in the positive active material layer to the average particle size B (pm) of the non-graphitic carbon contained in the negative active material layer is 4, and is preferably 4.5. In some aspects, the ratio A/B may be 5 or more or 6 or more. By setting the ratio A/B to be equal to or more than the above lower limit, the input performance is enhanced. On the other hand, the upper limit of the ratio A/B is not particularly limited, and is preferably 20, more preferably 10, and still more preferably 8. In some aspects, the ratio A/B may be 6 or less (for example, less than 6) or 5.5 or less (for example, 5 or less). When the ratio A/B is too large, the above-described input performance improving effect tends to slow down, and durability of the energy storage device prepared using the positive electrode and the negative electrode tends to decrease. By setting the ratio A/B to be equal to or less than the above upper limit, the energy storage device disclosed herein can be prepared with good production stability. The technology disclosed herein can be preferably carried out in an aspect in which the ratio A/B is 4 or more and 20 or less (preferably 4.5 or more and 15 or less, more preferably 5 or more and 10 or less, for example, 6 or more and 8 or less).

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in the air atmosphere of 1 atm, and more preferably have a mass loss of 5% or less when the temperature is raised from room temperature to 800°C. Examples of materials that have a mass loss equal to or less than a predetermined value include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device.

A porosity of the separator is preferably 80 vol% or less from the viewpoint of strength, and is preferably 20 vol% or more from the viewpoint of discharge performance. The term "porosity" herein is a volume-based value, and means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. When the polymer gel is used, the effect of suppressing liquid leakage is acquired. As the separator, a polymer gel may be used in combination with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, those in which some hydrogen atoms contained in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among them, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among them, EMC is preferable.

As the nonaqueous solvent, the cyclic carbonate or the chain carbonate is preferably used, more preferably, the cyclic carbonate and the chain carbonate are used in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate: chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as L₁SO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these, inorganic lithium salts are preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. When the content of the electrolyte salt is in the above range, it is possible to increase the ionic conductivity of the nonaqueous electrolyte solution.

The nonaqueous electrolyte solution may contain an additive, besides the nonaqueous solvent and the electrolyte salt. Examples of the additive include halogenated carbonic acid esters such as fluoroethylene carbonate (FEC) and difluoroethylene carbonate (DFEC); oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to a total mass of the nonaqueous electrolyte solution. The content of the additive falls within the above range, thereby making it possible to improve capacity retention performance or cycle performance after high-temperature storage, and to further improve safety.

As the nonaqueous electrolyte, a solid electrolyte may be used, or a nonaqueous electrolyte solution and a solid electrolyte may be used in combination.

The solid electrolyte can be selected from arbitrary materials with ionic conductivity, which are solid at normal temperature (for example, from 15°C to 25°C), such as lithium, sodium and calcium. Examples of the solid electrolyte include sulfide solid electrolytes, oxide solid electrolytes, oxynitride solid electrolytes, and polymer solid electrolytes.

Examples of the sulfide solid electrolyte include Li₂S-P₂S₅, LiI-Li₂S-P₂S₅, and Li₁₀Ge-P₂S₁₂ in the case of a lithium ion secondary battery.

The shape of the nonaqueous electrolyte energy storage device according to the present embodiment is not particularly limited, and examples thereof include cylindrical batteries, prismatic batteries, flat batteries, coin batteries and button batteries.

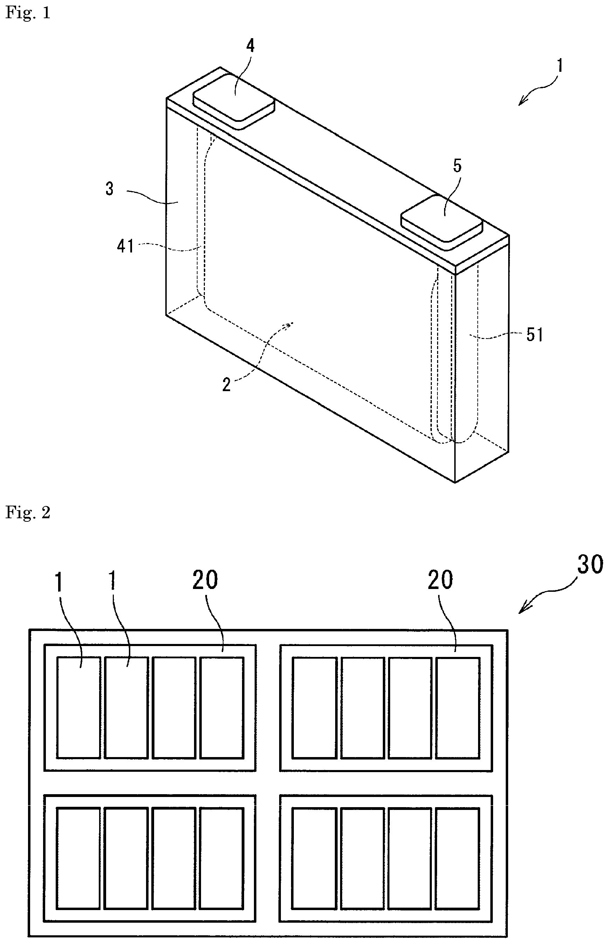

Fig. 1 illustrates a nonaqueous electrolyte energy storage device 1 as an example of prismatic batteries. Fig. 1 is a view illustrating the inside of a case in a perspective manner. An electrode assembly 2 including a positive electrode and a negative electrode wound with a separator interposed therebetween is housed in a prismatic battery case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices 1 on a power source for motor vehicles such as electric vehicles (EV), hybrid vehicles (HEV), and plug-in hybrid vehicles (PHEV), a power source for electronic equipment such as personal computers and communication terminals, or a power source for power storage, or the like. In this case, the technique of the present invention may be applied to at least one nonaqueous electrolyte energy storage device included in the energy storage unit.

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing the nonaqueous electrolyte energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, followed by sealing the inlet.

### <Other embodiments>

The nonaqueous electrolyte energy storage device according to the present invention is not limited to the embodiment described above, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

In the embodiment, a case where the nonaqueous electrolyte energy storage device is used as a nonaqueous electrolyte secondary battery (for example, lithium ion secondary battery) that is chargeable and dischargeable has been described, but the type, shape, dimensions, capacity, and the like of the nonaqueous electrolyte energy storage device are arbitrary. The present invention can also be applied to capacitors such as various secondary batteries, electric double layer capacitors, or lithium ion capacitors.

While the electrode assembly with the positive electrode and the negative electrode stacked with the separator interposed therebetween has been described in the above embodiment, the electrode assembly does not have to include the separator. For example, the positive electrode and the negative electrode may be brought into direct contact with each other in a state where a layer not exhibiting conductivity is formed on the active material layer of the positive electrode or negative electrode.

### EXAMPLES

Hereinafter, the present invention will be described more specifically with reference to Examples. The present invention is not limited to the following Examples.

### [Example 1]

### (Preparation of positive electrode)

A positive composite paste was prepared using lithium iron phosphate (specific surface area A 10 m²/g) as a polyanionic positive active material, acetylene black (AB) as a conductive agent, polyvinylidene fluoride (PVDF) as a binder, and N-methylpyrrolidone (NMP) as a nonaqueous dispersion medium. A mass ratio of lithium iron phosphate, AB, and PVDF was 90 : 5 : 5 in terms of solid content. The positive composite paste was applied onto a carbon-coated aluminum foil that served as a positive substrate, dried, and roll-pressed to prepare a positive active material layer, thereby obtaining a positive electrode.

### (Preparation of negative electrode)

A non-graphitizable carbon (HC: average particle size B 2.5 pm) as a non-graphitic carbon, a styrene-butadiene rubber (SBR) as a binder, carboxymethyl cellulose (CMC) as a thickener, and water as a dispersion medium were mixed to prepare a negative composite paste. The mass ratio of HC, SBR, and CMC was 96 : 3.3 : 0.7 in terms of solid content. The negative composite paste was applied onto a copper foil that served as a negative substrate, dried, and roll-pressed to prepare a negative active material layer, thereby obtaining a negative electrode.

### (Nonaqueous electrolyte)

A nonaqueous electrolyte was prepared by dissolving LiPF₆ of 1.1 mol/dm³ in concentration in a solvent obtained by mixing an ethylene carbonate (EC), a dimethyl carbonate (DMC), and an ethyl methyl carbonate (EMC) at volume ratios 30 : 35 : 35.

### (Separator)

As a separator, a polyethylene microporous film was used.

### (Assembly of nonaqueous electrolyte energy storage device)

The positive electrode, the negative electrode, and the separator were stacked to prepare an electrode assembly. The obtained electrode assembly was housed in a case, and then the nonaqueous electrolyte was injected into the case and then sealed to obtain a nonaqueous electrolyte energy storage device according to Example 1.

### [Comparative Example 1]

A nonaqueous electrolyte energy storage device according to Comparative Example 1 was obtained similarly to Example 1 except for using graphite (Gr) instead of HC as a negative active material.

### [Examples 2 and 3, Comparative Examples 2 to 4]

Nonaqueous electrolyte energy storage devices according to Examples 2 and 3 and Comparative Examples 2 to 4 were obtained similarly to Example 1 except that the specific surface area A of lithium iron phosphate as a polyanionic positive active material and the average particle size B of HC as non-graphitic carbon were as shown in Table 1.

### [Evaluation]

### (Charge curve)

Predetermined initial charge-discharge was performed on each nonaqueous electrolyte energy storage device according to Example 1 and Comparative Example 1, and then a charge curve (SOC-OCV curve) was obtained by the following procedure.

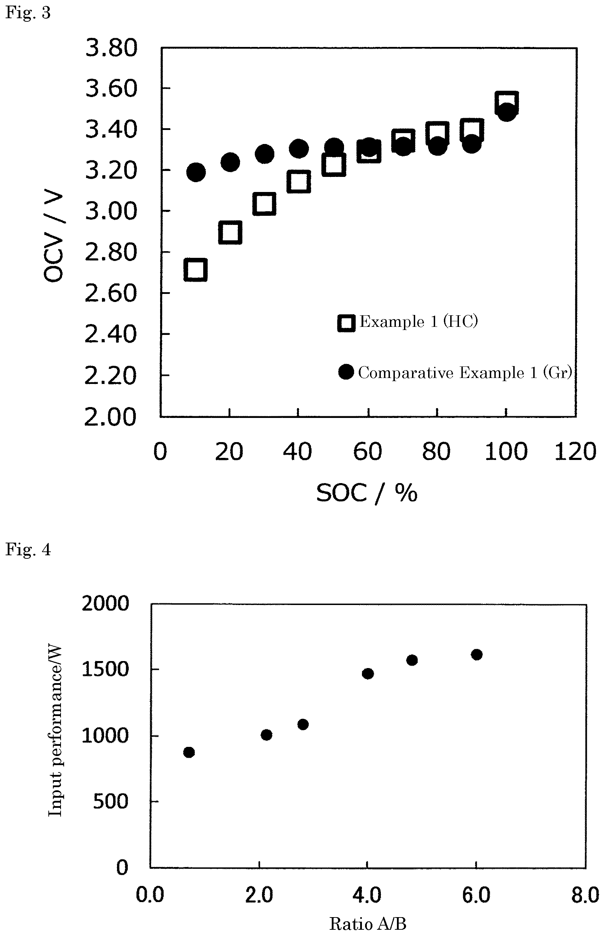

Constant current constant voltage charge was performed at a charge current of 1 C and an end-of-charge voltage of 3.6 V. With regard to the charge termination conditions, charge was performed until the total charge time reached 2 hours. Thereafter, constant current discharge was performed at a discharge current of 1 C and an end-of-discharge voltage of 2 V, and the capacity at this time was defined as a discharge capacity. Thereafter, an electric quantity of 10% of the discharge capacity was charged at a charge current of 1 C, the SOC was set to 10%, and the charge was paused for 2 hours. An average value of the OCV (open circuit voltage) from one and a half hours to two hours after the start of pause was taken as the OCV at the corresponding SOC. Charge and pause of the electric quantity of 10% of the discharge capacity were repeatedly performed until the SOC reached 100%. The obtained charge curve (SOC-OCV curve) is shown in Fig. 3.

As shown in Fig. 3, the charge curve of the nonaqueous electrolyte energy storage device according to Comparative Example 1 which is a combination of lithium iron phosphate and Gr is relatively flat. On the other hand, the charge curve of the nonaqueous electrolyte energy storage device according to Example 1 which is a combination of lithium iron phosphate and HC is inclined over a wide range of the SOC, and it can be seen that the SOC can be easily detected based on the voltage.

### (Input performance)

The Input performance of each nonaqueous electrolyte energy storage device according to Examples 1 to 3 and Comparative Examples 2 to 4 was evaluated by the following procedure. Charge was performed at a charge current of 1 C until the SOC reached 50%, discharge was performed at a discharge current of 15 C for 10 seconds, a pause period of 10 minutes was provided, and then charge was performed at a charge current of 15 C for 10 seconds. Similarly, the discharge current and the charge current were adjusted to 30 C and 45 C, and the input performance was obtained from the battery voltage 10 seconds after the start of charge at each charge current. The results are shown in Table 1. Fig. 4 shows a graph in which the ratio A/B of the specific surface area A (m²/g) of the polyanionic positive active material to the average particle size B (pm) of the non-graphitic carbon in each nonaqueous electrolyte energy storage device according to Examples 1 to 3 and Comparative Examples 2 to 4 is plotted on the horizontal axis and the input performance is plotted on the vertical axis.

**[Table 1]**

| | Polyanionic positive active material Specific surface area A (m²/g) | Non-graphitic carbon Average particle size B (µm) | Ratio A/B | Input performance (W) |
|---|---|---|---|---|
| Example 1 | **10** | **2.5** | **4.0** | **1471** |
| Example 2 | **12** | **2.5** | **4.8** | **1574** |
| Example 3 | **15** | **2.5** | **6.0** | **1617** |
| Comparative Example 2 | **7** | **10.0** | **0.7** | **877** |
| Comparative Example 3 | **7** | **3.3** | **2.1** | **1010** |
| Comparative Example 4 | **7** | **2.5** | **2.8** | **1090** |

As shown in Table 1, in the nonaqueous electrolyte energy storage devices according to Examples 1 to 3 in which the ratio A/B of the specific surface area A (m²/g) of the polyanionic positive active material to the average particle size B (pm) of the non-graphitic carbon was 4 or more, the input performance exceeded 1400 W, so that the input performance was high. Fig. 4 also shows that the ratio A/B has a high correlation with the input performance.

### INDUSTRIAL APPLICABILITY

The present invention is suitably used as a nonaqueous electrolyte energy storage device including a nonaqueous electrolyte secondary battery used as a power source for electronic equipment such as personal computers and communication terminals, automobiles, and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a positive electrode containing a polyanionic positive active material; and
a negative electrode containing non-graphitic carbon,
wherein a ratio A/B of a specific surface area A (m²/g) of the polyanionic positive active material to an average particle size B (pm) of the non-graphitic carbon is 4 or more.

2. The nonaqueous electrolyte energy storage device according to claim 1, wherein the specific surface area A of the polyanionic positive active material is more than 14.0 m²/g.

3. The nonaqueous electrolyte energy storage device according to claim 1 or 2, wherein the non-graphitic carbon has an average particle size B of 4 pm or less.

4. The nonaqueous electrolyte energy storage device according to any one of claims 1 to 3, wherein the ratio A/B is 10 or less.

5. The nonaqueous electrolyte energy storage device according to any one of claims 1 to 4, comprising non-graphitizable carbon as the non-graphitic carbon.
